(19) Europäisches Patentamt
European Patent Office
Office européen des brevets

(11) **EP 2 497 289 B1**

(12) **EUROPEAN PATENT SPECIFICATION**

(45) Date of publication and mention
of the grant of the patent:
**26.03.2014 Bulletin 2014/13**

(21) Application number: **09749069.2**

(22) Date of filing: **02.11.2009**

(51) Int Cl.:
*H04L 5/00* (2006.01)      *H04W 16/02* (2009.01)
*H04W 72/00* (2009.01)      *H04W 72/04* (2009.01)

(86) International application number:
**PCT/EP2009/064430**

(87) International publication number:
**WO 2011/050854 (05.05.2011 Gazette 2011/18)**

(54) **FRACTIONAL FREQUENCY REUSE IN CELLULAR COMMUNICATION SYSTEMS WITH MULTIPLE COMPONENT CARRIERS**

WIEDERVERWENDUNG VON TEILFREQUENZEN IN MOBILFUNKSYSTEMEN MIT MEHRKOMPONENTENTRÄGERN

RÉUTILISATION DE FRÉQUENCE FRACTIONNAIRE DANS DES SYSTÈMES DE COMMUNICATION CELLULAIRE À MULTIPLES PORTEUSES COMPOSANTES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**12.09.2012 Bulletin 2012/37**

(73) Proprietor: **Nokia Solutions and Networks Oy 02610 Espoo (FI)**

(72) Inventors:
• **PEDERSEN, Klaus, Ingemann**
**DK-9000 Aalborg (DK)**
• **YUANYE, Wang**
**DK-9220 Aalborg (DK)**

(74) Representative: **Borgström, Markus et al
Nokia Solutions and Networks GmbH & Co. KG
CEF T&I IPR / Patent Administration
80240 Munich (DE)**

(56) References cited:
• **GARCIA L G U ET AL: "Autonomous component carrier selection: interference management in local area environments for LTE-advanced" IEEE COMMUNICATIONS MAGAZINE, IEEE SERVICE CENTER, PISCATAWAY, US LNKD- DOI: 10.1109/MCOM.2009.5277463, vol. 47, no. 9, 1 September 2009 (2009-09-01), pages 110-116, XP011283372 ISSN: 0163-6804**
• **SIEMENS: "Interference Mitigation by Partial Frequency Reuse" 3GPP DRAFT; R1-060670, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Denver, USA; 20060209, 9 February 2006 (2006-02-09), XP050101587 [retrieved on 2006-02-09]**

**Description**

The present invention relates to fractional frequency reuse (FFR) in cellular communication systems with multiple component carriers (CCs).

An example of a system with multiple component carriers is LTE (Long Term Evolution)-Advanced. In such system non-contiguous spectrum allocations may be applied.

The present invention aims at improving FFR with respect to coverage and cell throughput in multi-carrier systems.

The IEEE document "Autonomous component carrier selection: interference management in local area environments for LTE-advanced" (IEEE Communications Magazine, vol. 47, no. 9, pages 110-116) by L. G. U. Garcia et al. discloses a method for selecting Secondary Component Carriers (SCC). The method avoids excessive interference to surrounding cells by a new SCC by configuring downlink measurements towards the serving cell and the surrounding cells. These measurements are used for calculating conditional C/I distributions as a measure for the interference to surrounding cells caused by a potential activation of a certain SCC.

3GPP document R1-060670 describes fractional frequency reuse of subcarriers within the same frequency band of an OFDM system.

The present invention aims in particular at providing an efficient reuse scheme for component carriers without configuring extensive measurements and without a high signaling effort in the system as set forth in claims 1 and 5. Further embodiments are set forth in the dependent claims.

According to an embodiment of the invention, this is achieved by performing cell-level CC selection.

Compared to conventional methods which require frequency domain sub-channelization techniques, e.g. OFDM (Orthogonal Frequency Domain Multiplex), the CC selection method according to an embodiment of the invention does not have this constraint, and can be used in any multi-carrier system, e.g. multi-carrier High Speed Packet Access (HSPA), multi-carrier Code Division Multiple Access (CDMA), and IEEE (Institute of Electrical and Electronics Engineers) 802.16m.

In the following embodiments of the invention will be described with reference to the accompanying drawings, in which:

Fig. 1 shows a diagram illustrating an example of downlink transmit power settings for a fractional frequency reuse.

Fig. 2 shows a schematic block diagram illustrating a structure of an apparatus according to an embodiment of the invention.

Figs. 3A and 3B show flow charts illustrating a CC selection method and a user assignment method according to an embodiment of the invention.

Fig. 4 shows a diagram illustrating fractional frequency reuse in a multi-carrier system according to an embodiment of the invention.

Fig. 5 shows a diagram illustrating performance of FFR according to an embodiment of the invention as compared with universal frequency reuse.

Current wireless communication systems tend to use the whole spectrum in each cell, leading to a universal frequency reuse. However, this can be problematic for cell-edge users who suffer from low signal strength and high inter-cell interference. Frequency reuse is an approach for inter-cell interference mitigation. It assigns the same frequency band in different cells, which are far apart from each other, thus avoiding high interference while allowing high utilization of the spectrum. The cost of using a reuse factor greater than one is that each cell will get less spectrum as compared with universal frequency reuse.

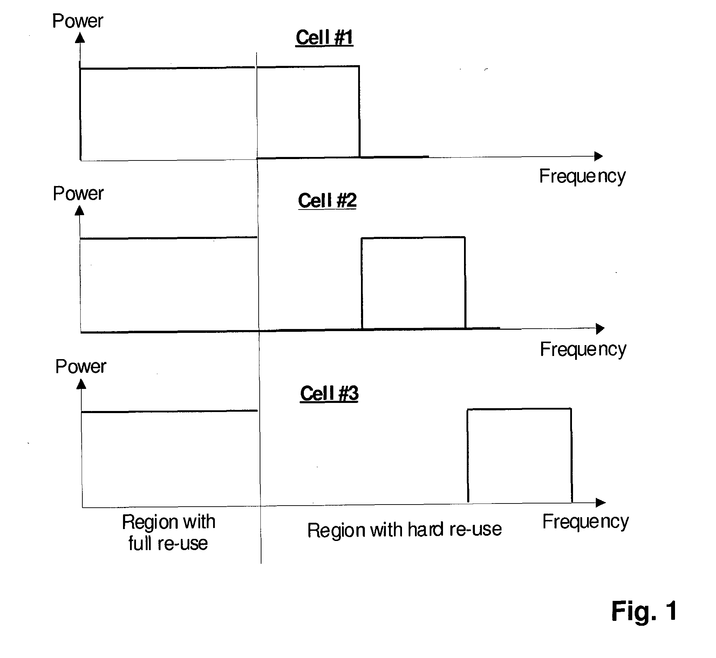

Assuming that only cell-edge users suffer from high interference, fractional frequency reuse may be adopted, where the idea is to serve cell-center users with universal frequency reuse, and cell-edge users with a high reuse factor. Fig. 1 shows a diagram illustrating an example of downlink transmit power settings of a base station for a fractional frequency reuse which is applied for one contiguous chunk of spectrum. In a region with full reuse of cells #1, #2 and #3 the same frequency band is applied in the cells #1, #2 and #3. In a region with hard reuse, fractional frequency reuse with frequency domain sub-channelization is adopted in cells #1, #2 and #3.

According to an embodiment of the invention, each cell of a cellular communication system selects component carriers (CCs) that it takes into use, and decides on which CCs individual users are assigned.

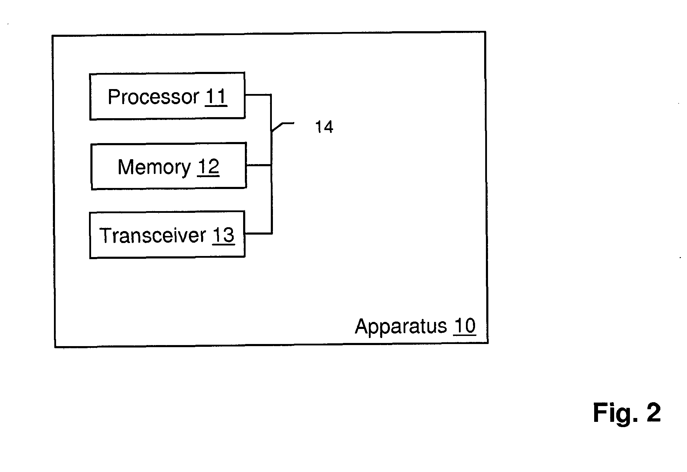

Fig. 2 shows a schematic block diagram illustrating an apparatus 10 according to an embodiment of the invention. The apparatus 10 may comprise a base station such as an eNB (evolved Node B) of a cellular communication system.

The apparatus 10 comprises a processor 11, a memory 12 and a transceiver 13 which are connected by a bus 14. The apparatus 10 may comprise further components for working as a base station which are not shown in Fig. 2.

The memory 12 may store a program, and the transceiver 13 may be coupled to one or more antennas (not shown) for bidirectional wireless communications over one or more wireless links with user equipments.

The terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and printed electrical connections, as well as by the use of electromagnetic energy, such as electromagnetic energy having wavelengths in the radio frequency region, the microwave region and the optical (both visible and invisible) region, as non-limiting examples.

The program may include program instructions that, when executed by the associated processor 11, enable the apparatus 10 to operate in accordance with the embodiments of this invention, as detailed below. Inherent in the processor 11 is a clock to enable synchronism among the various apparatus for transmissions and receptions within the appropriate time intervals and slots required, as scheduling grants and granted resources are time dependent. The transceiver 13 includes both transmitter and receiver, and inherent in each is a modulator/demodulator commonly known as a modem.

The program may be embodied in software, firmware and/or hardware, as is appropriate. In general, the embodiments of this invention may be implemented by computer software stored in the memory 12 and executable by the processor 11, or by hardware, or by a combination of software and/or firmware and hardware. Further in this regard it should be noted that the various logical step descriptions below may represent program steps, or interconnected logic circuits, blocks and functions, or a combination of program steps and logic circuits, blocks and functions.

The memory 12 may be of any type suitable to the local technical environment and may be implemented using any suitable data storage technology, such as semiconductor-based memory devices, magnetic memory devices and systems, optical memory devices and systems, fixed memory and removable memory. The processor 11 may be of any type suitable to the local technical environment, and may include one or more of general purpose computers, special purpose computers, microprocessors, digital signal processors (DSPs) and processors based on a multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

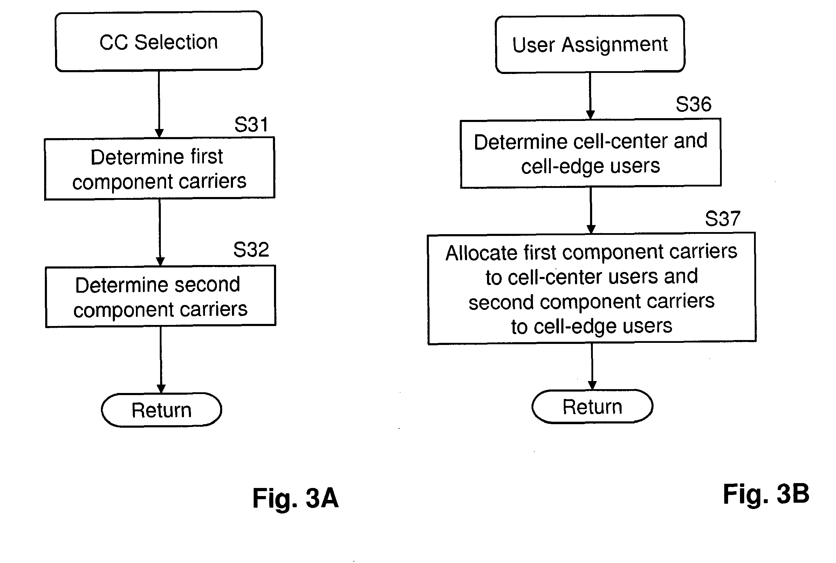

Fig. 3A shows a flow chart illustrating a CC selection method according to an embodiment of the invention.

The CC selection method comprises a step S31 of determining first component carriers from aggregated component carriers of a cellular communication system in accordance with a carrier frequency of the aggregated component carriers, wherein the first component carriers are to be reused with a reuse factor of one by cells of the cellular communication system, and a step S32 of determining for each of the cells second component carriers from the aggregated component carriers not determined as first component carriers, wherein the second component carriers are to be reused with a reuse factor greater than one.

According to an embodiment of selecting CCs at cell-level, the aggregated CCs are divided into two groups, in which one group (which comprises the first component carriers) is universally reused by all cells, and the other group (which comprises the second component carriers) is reused with a higher reuse factor than one. When considering non-contiguous CCs (as opposed to contiguous CCs), one of the significant differences is that the path loss is different for each CC. Assuming an example with CCs at 800 MHz and 2.6 GHz, there is about 10.2dB difference in terms of the free space path loss for the same distance. In this case, CCs with high carrier frequency should be associated with a reuse factor of one, as they have higher path loss, and therefore are more suitable for cell-center users. In other words, aggregated component carriers which have a high carrier frequency are determined as the first component carriers in step S31 in Fig. 3.

Moreover, the second component carriers may be determined in step S32 such that they are different for neighboring cells.

According to an embodiment of the invention, determining the first and second component carriers may comprise for each cell i of the cells of the cellular communication network a sorting of the aggregated component carriers in a descending order according to their carrier frequencies, and a selection of component carriers with indices I of:

$$I_i = [0, \ldots, U-1, U+\text{mod}\{[i, \ldots, i+M-U-1], N-U\}],$$

where N is the total number of the aggregated component carriers, U is the total number of the first component carriers, and M is the total number of component carriers assigned to each cell.

The values of N, U and M may be determined by the cellular communication system in which the apparatus 10 is employed and registered in the apparatus 10.

If the CCs are of the same size, the reuse factor for the second component carriers is (N-U)/(M-U).

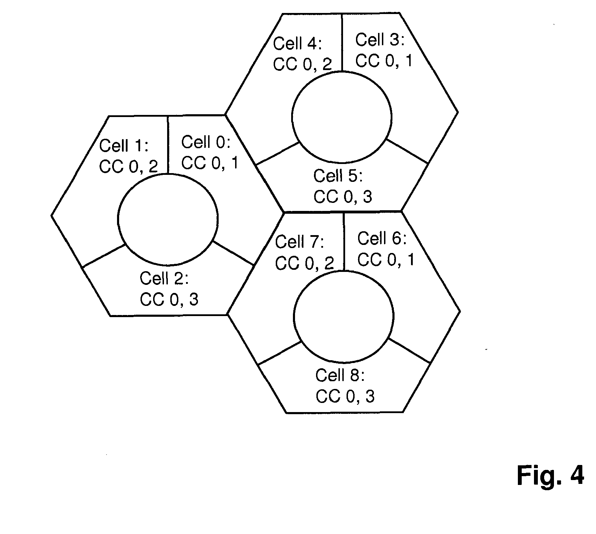

Fig. 4 shows a schematic block diagram illustrating an example of fractional frequency reuse in a multi-carrier system with N=4, U=1 and M=2.

As can be seen from Fig. 4, a component carrier with index 0 which has the highest carrier frequency is determined by cells 0 to 8 as first component carrier with a reuse factor of one, while component carriers with indices 1, 2 and 3 are determined by the cells 0 to 8 as second component carriers with a reuse factor of three. When adopting the above rule of selecting CCs with N=4, U=1 and M=2, one arrives at

$I_0$=[0, 1], i.e. cell 0 selects component carrier with index 0 as first component carrier and component carrier with index 1 as second component carrier,

$I_1$=[0, 2], i.e. cell 1 selects component carrier with index 0 as first component carrier and component carrier with index 2 as second component carrier,

$I_2$=[0, 3], i.e. cell 2 selects component carrier with index 0 as first component carrier and component carrier with index 3 as second component carrier,

$I_3$=[0, 1], i.e. cell 3 selects component carrier with index 0 as first component carrier and component carrier with index 1 as second component carrier,

$I_4$=[0, 2], i.e. cell 4 selects component carrier with index 0 as first component carrier and component carrier with index 2 as second component carrier,

$I_5$=[0, 3], i.e. cell 5 selects component carrier with index 0 as first component carrier and component carrier with index 3 as second component carrier,

$I_6$=[0, 1], i.e. cell 6 selects component carrier with index 0 as first component carrier and component carrier with index 1 as second component carrier,

$I_7$=[0, 2], i.e. cell 7 selects component carrier with index 0 as first component carrier and component carrier with index 2 as second component carrier, and

$I_8$=[0, 3], i.e. cell 8 selects component carrier with index 0 as first component carrier and component carrier with index 3 as second component carrier.

With N=4, U=1, M=2 and assuming that the CCs are of the same size, the reuse factor for the case shown in Fig. 4 is three.

Fig. 3B shows a flow chart illustrating a user assignment method according to an embodiment of the invention, which comprises a step S36 of classifying, for each of the cells of the cellular communication system, users of the cellular communication system as cell-edge users and cell-center users, and a step S37 of allocating the first component carriers to the cell-center users and the second component carriers to the cell-edge users.

According to an embodiment of the invention, the users are sorted according to their G-factor. The G-factor can be expressed as the path gain from the user or user equipment to its serving base station, divided by the summation of the path gain to its neighbouring cells. The users with low G-factor values are categorized as cell-edge users and served using the CCs with high reuse factor; the rest of the users are considered as cell-center users and served on the universally reused CCs. The ratio of cell-center and cell-edge users should be carefully chosen according to the total bandwidth with different reuse factors.

For example, a base station may be configured to have four CCs at fairly different carrier frequencies, e.g. from 800 MHz to 2.6 GHz. A group of users is connected to the base station, where one set of users are located at the edge of the base station's cell and the others stay in the vicinity of the base station, i.e. in the center of the cell.

When applying the above CC selection method and user assignment method, the base station ends up using all the CCs at high carrier frequency to serve the cell-center users, and a subset of the CCs at lower carrier frequency to serve the cell-edge users.

By using the above CC selection method and user assignment method, coverage of the cells is extended, while maintaining good spectrum utilization, and in turn, good average cell throughput. The above CC selection method and user assignment method are particularly useful for cases with non-contiguous CCs, e.g. for LTE-Advanced systems. In other words, the proposed FFR scheme enables an optimal application of FFR for systems with non-contiguous spectrum allocations.

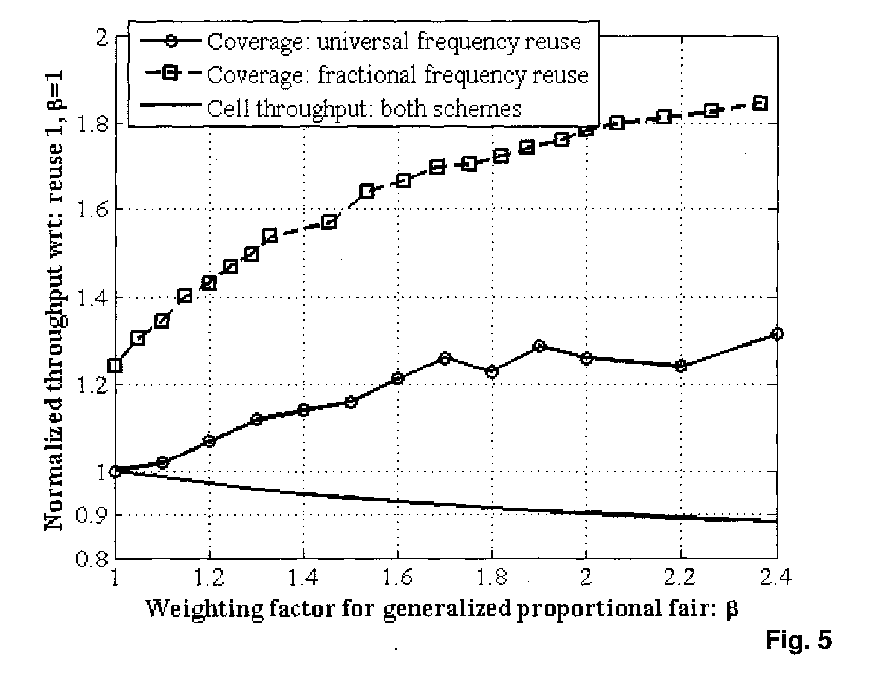

In order to evaluate the proposed FFR scheme, non-contiguous carrier aggregation is assumed, which has two CCs with low carrier frequency (one at 1.8 GHz, the other at 2.1 GHz), each CC having a bandwidth of 10 MHz, and a CC at 3.6 GHz carrier frequency with a bandwidth of 20 MHz. According to the FFR scheme as described above, the 20 MHz CC is selected by all cells, and the two 10 MHz CCs are reused by the cells with a reuse factor of two. The performance of the proposed FFR scheme as compared with universal frequency reuse is shown in Fig. 5.

The solid line in Fig. 5 shows the normalized throughput with respect to reuse=1, $\beta$=1 ($\beta$ is the weighting factor for generalized proportional fair scheduling) over $\beta$ for both the universal frequency reuse scheme and the proposed FFR scheme. Moreover, Fig. 5 illustrates cell coverage of the universal frequency reuse scheme (solid line marked with circles) and the proposed FFR scheme (broken line marked with squares) over $\beta$.

For both schemes, generalized proportional fair scheduling is employed to trade-off between average cell throughput and coverage. The performance of universal frequency reuse is evaluated with different weighting factors as shown in the x-axis. For the proposed FFR scheme, the weighting factor is tuned so that the achievable throughput is the same as with universal frequency reuse. Then the gain of using the proposed FFR scheme can be seen from the coverage performance of the two schemes. As an example, the proposed FFR scheme with weighting factor of 0.65 achieves the same cell throughput as universal frequency reuse with a weighting factor of 1.0. At the same time, the proposed FFR scheme offers a coverage gain of 24%. When compared to the reference case of universal frequency reuse and weighting factor of 1.0 (usual proportional fair scheduling), combining the proposed FFR scheme and the generalized proportional fair scheduling can achieve up to 80% coverage gain with only 10% loss in cell throughput. Universal frequency reuse, however, has only 30% coverage gain at the same loss in cell throughput. This makes the proposed FFR scheme an attractive solution for improving coverage in multi-carrier systems with non-contiguous carrier aggregation.

Thus, as can be seen from Fig. 5, the throughput decreases over $\beta$ as higher beta values favor users or user equipments (UEs) in the scheduling procedure with in average low data rates, i.e. UEs (like cell-edge users) which experience bad channel conditions. As a consequence of this, the throughput of cell-edge users will increase over $\beta$ even though the over-all throughput in the cell is reduced. And this increase of throughput for cell-edge users is illustrated by the coverage curves in Fig. 5.

As can be seen from the above description, there is significant gain from applying the proposed FFR scheme for LTE-Advanced with non-contiguous spectrum allocation. This is opposed to the rather low gains of applying FFR for cases with contiguous spectrum allocations.

According to an embodiment of the invention, an apparatus such as the apparatus 10 shown in Fig. 2 comprises a first determining means for determining first component carriers from aggregated component carriers of a cellular communication system in accordance with a carrier frequency of the aggregated component carriers, wherein the first component carriers are to be reused with a reuse factor of one by a cell of the cellular communication system, and second determining means for determining for the cell second component carriers from the aggregated component carriers not determined as first component carriers, wherein the second component carriers are to be reused with a reuse factor greater than one.

The first and second determining means may comprise the processor 11 shown in Fig. 2.

The first determining means may determine component carriers of the aggregated component carriers which have a high carrier frequency as the first component carriers.

The second determining means may determine the second component carriers such that they are different for neighboring cells.

The apparatus may further comprise classifying means for classifying for the cell users of the cell as cell-edge users and cell-center users e.g. in accordance with a G-factor of the users, and allocating means for allocating the first component carriers to the cell-center users and the second component carriers to the cell-edge users.

The classifying means and the allocating means may comprise the processor 11.

The first and second determining means for determining the first and second component carriers for the cell i may comprise sorting means for sorting the aggregated component carriers in a descending order according to their carrier frequencies, and selecting means for selecting component carriers with indices I of:

$$I_i = [0, \ldots, U-1, U+\bmod\{[i, \ldots, i+M-U-1], N-U\}],$$

where N is the total number of the aggregated component carriers,
U is the total number of the first component carriers, and
M is the total number of component carriers assigned to each cell.

The sorting means and the selecting means may comprise the processor 11.

According to an embodiment of the invention, first component carriers are determined from aggregated component carriers of a cellular communication system in accordance with a carrier frequency of the aggregated component carriers, wherein the first component carriers are to be reused with a reuse factor of one by cells of the cellular communication system. For each of the cells, second component carriers are determined from the aggregated component carriers not determined as first component carriers, wherein the second component carriers are to be reused with a reuse factor greater than one. For each of the cells, users of the cellular communication system are classified as cell-edge users and cell-center users, for example in accordance with a G-factor of the users. The first component carriers are allocated to the cell-center users and the second component carriers are allocated to the cell-edge users.

It is to be understood that the above description is illustrative of the invention and is not to be construed as limiting the invention. Various modifications and applications may occur to those skilled in the art without departing from the scope of the invention as defined by the appended claims.

**Claims**

1.   A method comprising:

determining (S31) first component carriers from aggregated component carriers of a cellular communication system in accordance with a carrier frequency of the aggregated component carriers, wherein the first component carriers are used in a first and a neighboring second cell; and
determining (S32) second component carriers from the aggregated component carriers not determined as first component carriers, wherein a component carrier in the set of second component carriers used in the first cell is not used in the neighboring second cell,
wherein the aggregated component carriers are non-contiguous, and
**characterized in** further comprising selecting the first component carriers in a first group of the aggregated component carriers,
wherein the first group consists of component carriers with a high carrier frequency, and
selecting the second component carriers in a second group of the aggregated component carriers,
wherein the second group consists of component carriers with a low carrier frequency,
using (S37) component carriers of the first group for serving cell-center users of the first cell, and
using component carriers of the second group for serving cell-edge users of the first cell.

2.   The method of claim 1, wherein the first and second component carriers occupy a non-contiguous frequency spectrum.

3.   The method of claim 1 or 2, comprising:

for each of the cells, classifying users of the cellular communication system as cell-edge users and cell-center users based on path gains in accordance with a user-specific factor indicative of the path gain of a user to its serving base station, divided by the summation of the path gains of the user to neighboring cells.

4.   The method of any one of claims 1 to 3, wherein determining the first and second component carriers for each cell i of the cells comprises:

sorting the aggregated component carriers in a descending order according to their carrier frequencies; and
selecting component carriers with indices I of:

$$I_i = [0, \ldots, U-1, U + \mathrm{mod}\{[i, \ldots, i+M-U-1], N-U\}],$$

where N is the total number of the aggregated component carriers,
U is the total number of the first component carriers, and
M is the total number of component carriers assigned to each cell.

5.   An apparatus comprising:

a processor configured to determine first component carriers from aggregated component carriers of a cellular communication system in accordance with a carrier frequency of the aggregated component carriers, wherein the first component carriers are used in a first and a neighboring second cell, and

determine second component carriers from the aggregated component carriers not determined as first component carriers, wherein a component carrier in the set of second component carrier used in the first cell is not used in the neighboring second cell,

wherein the aggregated component carriers are non-contiguous, and

**characterized in** the processor further being configured to select the first component carriers in a first group of the aggregated component carriers,

wherein the first group consists of component carriers with a high carrier frequency, and

to select the second component carriers in a second group of the aggregated component carriers,

wherein the second group consists of component carriers with a low carrier frequency,

to use component carriers of the first group for serving cell-center users of the first cell, and

to use component carriers of the second group for serving cell-edge users of the first cell.

6. The apparatus of claim 5, wherein the first and second component carriers occupy a non-contiguous frequency spectrum.

7. The apparatus of claim 5 or 6, wherein the processor is configured to classify for the users of the cell as cell-edge users and cell-center users based on path gains in accordance with a user-specific factor indicative of the path gain of a user to its serving base station, divided by the summation of the path gains of the user to neighboring cells.

8. The apparatus of any one of claims 5 to 7, wherein the processor, to determine the first and second component carriers for the cell i, is configured to:

sort the aggregated component carriers in a descending order according to their carrier frequencies, and select component carriers with indices I of:

$$I_i=[0,…,U-1,U+mod\{[i,…,i+M-U-1],N-U\}],$$

where N is the total number of the aggregated component carriers,
U is the total number of the first component carriers, and
M is the total number of component carriers assigned to each cell.

9. A computer program product including a program for a processing device, comprising software code portions for performing the steps of any one of claims 1 to 4 when the program is run on the processing device.

10. The computer program product according to claim 9, wherein the computer program product comprises a computer-readable medium on which the software code portions are stored.

11. The computer program product according to claim 10, wherein the program is directly loadable into an internal memory of the processing device.

**Patentansprüche**

1. Verfahren, das Folgendes umfasst:

Bestimmen (S31) erster Komponententräger aus zusammengesetzten Komponententrägern eines zellulären Kommunikationssystems entsprechend einer Trägerfrequenz der zusammengesetzten Komponententräger, wobei die ersten Komponententräger in einer ersten und einer benachbarten zweiten Zelle verwendet werden; und

Bestimmen (S32) zweiter Komponententräger aus zusammengesetzten Komponententrägern, die nicht als erste Komponententräger bestimmt sind, wobei ein Komponententräger aus der Menge der zweiten Komponententräger, der in der ersten Zelle verwendet wird, nicht in der zweiten Zelle verwendet wird, wobei die zusammengesetzten Komponententräger unzusammenhängend sind, und

ferner **dadurch gekennzeichnet, dass** das Verfahren Folgendes umfasst: Auswählen der ersten Komponententräger in einer ersten Gruppe der zusammengesetzten Komponententräger,
wobei die erste Gruppe aus Komponententrägern mit einer hohen Trägerfrequenz besteht, und
Auswählen der zweiten Komponententräger in einer zweiten Gruppe der zusammengesetzten Komponententräger,
wobei die zweite Gruppe aus Komponententrägern mit einer niedrigen Trägerfrequenz besteht, und
Verwenden (S37) von Komponententrägern der ersten Gruppe zur Bedienung von Anwendern im Zellenzentrum der ersten Zelle, und
Verwenden von Komponententrägern der zweiten Gruppe zur Bedienung von Anwendern am Zellenrand der ersten Zelle.

2. Verfahren nach Anspruch 1, wobei die ersten und die zweiten Komponententräger ein unzusammenhängendes Frequenzspektrum belegen.

3. Verfahren nach Anspruch 1 oder 2, das Folgendes umfasst:

Klassifizieren von Anwendern des zellulären Kommunikationssystems als Anwender am Zellenrand und als Anwender im Zellenzentrum für jede der Zellen basierend auf Pfadverstärkungen entsprechend einem anwenderspezifischen Faktor, der die Pfadverstärkung eines Anwenders bis zu der Basisstation, die ihn bedient, anzeigt, dividiert durch die Summe der Pfadverstärkungen des Anwenders zu benachbarten Zellen.

4. Verfahren nach einem der Ansprüche 1 bis 3, wobei das Bestimmen der ersten und der zweiten Komponententräger für jede Zelle i der Zellen Folgendes umfasst:

Sortieren der zusammengesetzten Komponententräger in einer absteigenden Reihenfolge nach ihren Trägerfrequenzen; und
Auswählen von Komponententrägern mit Indizes I aus:

$$I_i = \lceil 0, \ldots, U-1, U + \mathrm{mod}\{\lceil i, \ldots, i+M-U-1\rceil, N-U\}\rceil,$$

wobei N die Gesamtzahl der zusammengesetzten Komponententräger ist, U die Gesamtzahl der ersten Komponententräger ist und M die Gesamtzahl der Komponententräger, die jeder Zelle zugeordnet sind, ist.

5. Vorrichtung, die Folgendes umfasst:

einen Prozessor, der dazu konfiguriert ist, erste Komponententräger aus zusammengesetzten Komponententrägern eines zellulären Kommunikationssystems entsprechend einer Trägerfrequenz der zusammengesetzten Komponententräger zu bestimmen, wobei die ersten Komponententräger in einer ersten und einer benachbarten zweiten Zelle verwendet werden, und
zweite Komponententräger aus zusammengesetzten Komponententrägern, die nicht als erste Komponententräger bestimmt sind, zu bestimmen, wobei ein Komponententräger aus der Menge der zweiten Komponententräger, der in der ersten Zelle verwendet wird, nicht in der zweiten, benachbarten Zelle verwendet wird,
wobei die zusammengesetzten Komponententräger unzusammenhängend sind, und
**dadurch gekennzeichnet, dass** der Prozessor ferner dazu konfiguriert ist,
die ersten Komponententräger in einer ersten Gruppe der zusammengesetzten Komponententräger auszuwählen,
wobei die erste Gruppe aus Komponententrägern mit einer hohen Trägerfrequenz besteht, und
die zweiten Komponententräger in einer zweiten Gruppe der zusammengesetzten Komponententräger auszuwählen,
wobei die zweite Gruppe aus Komponententrägern mit einer niedrigen Trägerfrequenz besteht, und
die Komponententräger der ersten Gruppe zur Bedienung von Anwendern im Zellenzentrum der ersten Zelle zu verwenden und
die Komponententräger der zweiten Gruppe zur Bedienung von Anwendern am Zellenrand der ersten Zelle zu verwenden.

6. Vorrichtung nach Anspruch 5, wobei die ersten und die zweiten Komponententräger ein unzusammenhängendes Frequenzspektrum belegen.

**7.** Vorrichtung nach Anspruch 5 oder 6, wobei der Prozessor dazu konfiguriert ist, die Anwender der Zelle als Anwender am Zellenrand und als Anwender im Zellenzentrum basierend auf Pfadverstärkungen entsprechend einem anwenderspezifischen Faktor, der die Pfadverstärkung eines Anwenders bis zu der Basisstation, die ihn bedient, anzeigt, dividiert durch die Summe der Pfadverstärkungen des Anwenders zu benachbarten Zellen zu klassifizieren.

**8.** Vorrichtung nach einem der Ansprüche 5 bis 7, wobei der Prozessor zum Bestimmen der ersten und der zweiten Komponententräger für die Zelle i zu Folgendem konfiguriert ist:

Sortieren der zusammengesetzten Komponententräger in einer absteigenden Reihenfolge nach ihren Trägerfrequenzen; und
Auswählen von Komponententrägern mit Indizes I aus:

$$I_i = [0,…,U-1,U + mod\{[i,…,i+M-U-1],N-U\}],$$

wobei N die Gesamtzahl der zusammengesetzten Komponententräger ist, U die Gesamtzahl der ersten Komponententräger ist und M die Gesamtzahl der Komponententräger, die jeder Zelle zugeordnet sind, ist.

**9.** Computerprogrammprodukt, das ein Programm für eine Verarbeitungsvorrichtung umfasst, das Software-Code-Abschnitte zum Ausführen der Schritte eines der Ansprüche 1 bis 4 beinhaltet, wenn das Programm auf der Verarbeitungsvorrichtung ausgeführt wird.

**10.** Computerprogrammprodukt nach Anspruch 9, wobei das Computerprogrammprodukt ein computerlesbares Medium umfasst, auf dem die Software-Code-Abschnitte gespeichert sind.

**11.** Computerprogrammprodukt nach Anspruch 10, wobei das Programm direkt in einen internen Speicher der Verarbeitungsvorrichtung geladen werden kann.

**Revendications**

**1.** Procédé comprenant :

la détermination (S31) de premières porteuses composantes à partir de porteuses composantes agrégées d'un système de communication cellulaire selon une fréquence porteuse des porteuses composantes agrégées, les premières porteuses composantes étant utilisées dans une première cellule et une deuxième cellule voisine ; et
la détermination (S32) de deuxièmes porteuses composantes à partir des porteuses composantes agrégées non déterminées comme premières porteuses composantes, une porteuse composante dans l'ensemble de deuxièmes porteuses composantes utilisée dans la première cellule n'étant pas utilisée dans la deuxième cellule voisine,
dans lequel les porteuses composantes agrégées ne sont pas contiguës, et
**caractérisé en ce qu'**il comprend en outre la sélection des premières porteuses composantes dans un premier groupe des porteuses composantes agrégées,
dans lequel le premier groupe est constitué par des porteuses composantes avec une fréquence porteuse élevée, et
la sélection des deuxièmes porteuses composantes dans un deuxième groupe des porteuses composantes agrégées,
dans lequel le deuxième groupe est constitué par des porteuses composantes ayant une faible fréquence porteuse,
l'utilisation (S37) de porteuses composantes du premier groupe pour desservir des utilisateurs de centre de cellule de la première cellule, et
l'utilisation de porteuses composantes du deuxième groupe pour desservir des utilisateurs de périphérie de cellule de la première cellule.

**2.** Procédé selon la revendication 1, dans lequel les premières et deuxièmes porteuses composantes occupent un spectre de fréquences non contigu.

**3.** Procédé selon la revendication 1 ou 2, comprenant :

pour chacune des cellules, le classement des utilisateurs du système de communication cellulaire en tant qu'utilisateurs de périphérie de cellule et utilisateurs de centre de cellule sur la base de gains de trajet selon un facteur spécifique à l'utilisateur indiquant le gain de trajet d'un utilisateur vers sa station de base de desserte, divisés par la somme des gains de trajet de l'utilisateur vers les cellules voisines.

**4.** Procédé selon l'une quelconque des revendications 1 à 3, dans lequel la détermination des premières et deuxièmes porteuses composantes pour chaque cellule i de la cellule comprend :

le tri des porteuses composantes agrégées par ordre décroissant selon leurs fréquences porteuses ; et
la sélection de porteuses composantes avec les indices I de :

$$I_i = [0, \ldots, U-1, U + \mathrm{mod}\{[i, \ldots, i+M-U-1], N-U\}],$$

où N est le nombre total des porteuses composantes agrégées,
U est le nombre total des premières porteuses composantes, et
M est le nombre total de porteuses composantes attribuées à chaque cellule.

**5.** Appareil comprenant :

un processeur configuré pour déterminer des premières porteuses composantes à partir de porteuses composantes agrégées d'un système de communication cellulaire selon une fréquence porteuse des porteuses composantes agrégées, les premières porteuses composantes étant utilisées dans une première cellule et une deuxième cellule voisine, et
la détermination de deuxièmes porteuses composantes à partir des porteuses composantes agrégées non déterminées comme premières porteuses composantes, une porteuse composante dans l'ensemble de deuxièmes porteuses composantes utilisée dans la première cellule n'étant pas utilisée dans la deuxième cellule voisine,
dans lequel les porteuses composantes agrégées ne sont pas contiguës, et
**caractérisé en ce que** le processeur est en outre configuré
pour sélectionner les premières porteuses composantes dans un premier groupe des porteuses composantes agrégées,
dans lequel le premier groupe est constitué par des porteuses composantes avec une fréquence porteuse élevée, et
pour sélectionner les deuxièmes porteuses composantes dans un deuxième groupe des porteuses composantes agrégées,
dans lequel le deuxième groupe est constitué par des porteuses composantes ayant une faible fréquence porteuse,
pour utiliser des porteuses composantes du premier groupe pour desservir des utilisateurs de centre de cellule de la première cellule, et
pour utiliser des porteuses composantes du deuxième groupe pour desservir des utilisateurs de périphérie de cellule de la première cellule

**6.** Appareil selon la revendication 5, dans lequel les premières et deuxièmes porteuses composantes occupent un spectre de fréquences non contigu.

**7.** Appareil selon la revendication 5 ou 6, dans lequel le processeur est configuré pour classer les utilisateurs du système de communication cellulaire en tant qu'utilisateurs de périphérie de cellule et utilisateurs de centre de cellule sur la base de gains de trajet selon un facteur spécifique à l'utilisateur indiquant le gain de trajet d'un utilisateur vers sa station de base de desserte, divisés par la somme des gains de trajet de l'utilisateur vers les cellules voisines.

**8.** Appareil selon l'une quelconque des revendications 5 à 7, dans lequel le processeur, pour déterminer les premières et deuxièmes porteuses composantes pour la cellule i, est configuré pour :

trier les porteuses composantes agrégées par ordre décroissant selon leurs fréquences porteuses ; et
sélectionner des porteuses composantes avec les indices I de :

$$I_l = \{0, \dots, U-1, U+\text{mod}\{[i, \dots, i+M-U-1], N-U\}\},$$

où N est le nombre total des porteuses composantes agrégées,
U est le nombre total des premières porteuses composantes, et
M est le nombre total de porteuses composantes attribuées à chaque cellule.

9. Produit de programme informatique comprenant un programme pour un dispositif de traitement, comprenant des parties de code logiciel pour effectuer les étapes selon l'une quelconque des revendications 1 à 4 lorsque le programme est exécuté sur le dispositif de traitement.

10. Produit de programme informatique selon la revendication 9, dans lequel le produit de programme informatique comprend un support lisible sur ordinateur sur lequel les parties de code logiciel sont stockées.

11. Produit de programme informatique selon la revendication 10, dans lequel le programme est directement chargeable dans une mémoire interne du dispositif de traitement.

$$I_l = \{0, \dots, U-1, U+\text{mod}\{[i, \dots, i+M-U-1], N-U\}\},$$

Fig. 1

EP 2 497 289 B1

EP 2 497 289 B1

**Fig. 2**

Processor 11

Memory 12

Transceiver 13

14

Apparatus 10

13

```
        ┌──────────────────┐                        ┌──────────────────┐
        │   CC Selection   │                        │ User Assignment  │
        └────────┬─────────┘                        └────────┬─────────┘
                 │                                            │         S36
                 │              S31                  ┌────────▼─────────┐
        ┌────────▼─────────┐                         │ Determine cell-center and │
        │  Determine first │                         │   cell-edge users │
        │ component carriers│                        └────────┬─────────┘
        └────────┬─────────┘                                  │         S37
                 │              S32            ┌───────────────▼───────────────┐
        ┌────────▼─────────┐                   │ Allocate first component carriers │
        │ Determine second │                   │    to cell-center users and    │
        │ component carriers│                  │   second component carriers    │
        └────────┬─────────┘                   │      to cell-edge users        │
                 │                             └───────────────┬───────────────┘
            ┌────▼────┐                                        │
           ( Return  )                                    ┌────▼────┐
            └─────────┘                                   ( Return  )
                                                           └─────────┘
```

**Fig. 3A**                                        **Fig. 3B**

Fig. 4

Fig. 5

EP 2 497 289 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. G. U. GARCIA.** Autonomous component carrier selection: interference management in local area environments for LTE-advanced. *IEEE Communications Magazine,* vol. 47 (9), 110-116